# EUROPEAN PATENT SPECIFICATION

(11) **EP 3 475 137 B1**
(45) Date of publication and mention of the grant of the patent: **02.11.2022**
(21) Application number: 17751827.1
(22) Date of filing: 21.06.2017
(51) Int. Cl.: B61D 3/20, B61D 47/00, B65G 63/02

(54) **METHOD AND SYSTEM FOR TRANSLOADING OF THE CARGO FROM THE RAIL OR TO THE RAIL**
VERFAHREN UND SYSTEM ZUM UMSCHLAG VON LASTEN VON DER SCHIENE ODER AUF DIE SCHIENE
PROCÉDÉ ET SYSTÈME DE TRANSBORDEMENT DU CHARGEMENT DEPUIS LE RAIL OU VERS LE RAIL

(30) Priority: 23.06.2016 SK 500832016
(43) Date of publication of application: 01.05.2019
(73) Proprietor: Hrapko, Peter, 821 03 Bratislava (SK)
(72) Inventor: Hrapko, Peter, 821 03 Bratislava (SK)
(74) Representative: Porubcan, Róbert
(86) International application number: PCT/IB2017/053708
(87) International publication number: WO 2017/221178

(56) References cited:
- EP-A1- 0 831 002
- EP-A1- 0 964 808
- EP-A1- 1 879 821
- EP-A1- 2 053 000

## Description

### Field of technology

The invention concerns the trans-shipment point of the transload of cargos from rail cars to trucks or between the rail cars themselves, and it concerns mainly horizontal transloading of the intermodal cargo unites where the cargo has a form of the standardized cargo container or of the removable superstructure with standardized dimensions. The invention discloses a method of quick transloading of the cargo and it discloses a system with multiple elements for realization of this method.

### Prior state of the art

In international and domestic transport the containers with the unified width (8'00" = 2438 mm) and varying length according to dimension series defined by ISO standard. These containers or various mobile superstructures together with the outer shape of the container form an intermodal transport unit (UTI) thanks to which the cargo is effectively transferred by multiple means of transport.

During the transload of the intermodal transport unit from the rail to the trucks various cranes are used, for example the ones mounted on the cranes mounted on the rail siding, truck cranes, and so on. Some types of the devices for the horizontal transloading of the cargo from the rail and to the rail are described in IN.HO.TRA (Interoperable Intermodal Horizontal Transhipment) document, which has been produced at the request of European Commission in 2003. In page 10 this publication discloses a mobile crane with upper platform which stretches out to the side and lifts the containers. The solution only allows to load one container in the group, since the construction of the cargo has voluminous crane travels on the sides of the front of the container. The disadvantage is also a risk of the colision of the upper platform with the electric traction line and the solution therefore can be used in case of electrified railroad; or the container car must be non-electrically moved to the railroad without electric traction line. This complicates and slows down the transloading of cargo. The solutions disclosed in pages 12 to 14 suffer from similar problems; they require high and complex support constructions.

The invention according to YU28402A uses a pair of gantry loaders which move towards the fronts of the containers and after lifting the loaders move to the side. The disadvantage is the height of the gantry loaders themselves. Similar disadvantage stems from the solution according to WO0128836A1 which on top of that requires a specifically adjusted rail chassis. Other published documents DE4127202A1, DE4439187A1, DE19748646A1, EP0084823A1, JPH07267373A, US6354782B1, GB2111023A use sizable and height oriented constructions which do not allow the transloading of multiple cargos at the same time.

The solutions according to publication DE3248267A1 are complicated constructions with low stability and they are designed for emergency or one-off transloads of the container.

Publication EP2053000A1 describes system comprising at least two pairs of lifting members separated at least in space above the main track, and able to flank the load-containing unit on opposite sides about the main track and to translate it vertically by achieving a grip on lift blocks. Publication EP1879821A1 describes reloading system for reloading from one railway carriage to another or to another vehicle. The loading surface of the loading unit for loading is recorded by means of a detector body. An interlocking connection between a hoisting device and a loading surface of the loading unit is generated. The hoisting device lifts the loading unit. A boom is extended from an idle position under the loading unit by a displacement unit, the hoist device lowers the loading unit onto the boom. The loading unit is moved to the new position by means of the displacement unit. The boom is withdrawn to the idle position thereof.

Such system of the transloading is desired which will have low energy and investment demands, which will allow to quickly transload the cargo even in case of the electrified railroad without the need to adjust the rail cars or trucks. New system and method will allow the transloading of multiple containers and the same time, or it will eventually allow automatized operation.

### Essence of the invention

The invention is defined in claims 1 to 12. The abovementioned deficiencies are significantly remedied by the system for transloading of cargo from the rail to the rail, which includes the first zone with the permanent way with the pair of rails and the second zone with the means for horizontal movement of the cargo and preferably a third zone, too, for parking at least one truck, whereby the system includes lifting means, and whereby the cargo standardized connecting openings according to this invention which essence lies in the fact that the first zone is equipped by at least one pair of the low-lift push means (or devices) for lifting the cargo, whereby the groundplan position of this means is slidably adjustable alongside the rail top and they are placed mutually opposite and in the distance pursuant to the dimensions of the cargo. The second zone has at least two slidably and parallel led jibs which in one outermost position interfere in the first zone and in second outermost position they interfere to the third zone, whereby the jibs are equipped by the connecting elements for connection with the cargo through its connecting openings and the jibs have adjustable mutual distance corresponding to the length of the cargo.

The terms first, second and third in this document denote individual zones but they do not denote the order of the actions and their significance; the numbering of the zones is interchangeable with the purpose and function of individual zones maintained. The zones have line character; the follow rails of the permanent way in parallel. The zones neighbour each other, the second zone has one first zone on one side and third zone on the other side.

The system can have two second zones by both sides of the first zone. These second zones are followed by third zones, which allows for the transloading on both sides of the permanent way. An arrangement is also possible where the second zone is connected to the first zone and then the second first zone is connected, which can connect two permanent ways with, for example, different track gauge. In such case the transloading takes place from one rail car to second rail car.

The low-lifting push means serve for lifting of the cargo in such a way that cargo is released from its connection with the rail car. The term "low-lift" means that the lift which corresponds to the size of the connecting elements is sufficient; the lift which would surpass one fourth or one half of the height of the cargo is not necessary. The interpretation of the term "low-lift" should correspond to the common terminology used in cases of low-lift and high-lift trucks (or stackers).

The term "push" denotes the fact that low-lift means act from below - they do not lift the cargo by pulling from above, but by pushing from below. This can concern pressure telescopic (or draw-out) legs which are led by the sides of the permanent way, or pressure lifters on the upper side of the jibs. It is preferable if the low-lift push means are arranged in such a way that their movement in the direction alongside the permanent way is possible, and that their position relative to the rail car and truck is adjustable. The position of the rail car and truck during each stop of the train or truck, respectively, is different and low-lift push means must be positioned relative to the cargo with a precision that is smaller than the dimension of the spike of the connecting element.

The term "cargo" in this document means mainly - but not exclusively - an intermodal transport unit (UTI), mainly in form of a container or removable superstructure. In practice it will usually be a cargo which has outer body with the standardized connecting openings and inside the body there is a space for transferred goods or technology.

The proposed invention advantageously uses the fact that the body of the cargo with the standardized openings has sufficient solidity and strength and can be grasped through either group of the four lower connecting openings of the cargo. In order to release the cargo from the connection with the rail car, therefore, no height-oriented construction is necessary; no portal which precludes the lifting below the electric traction line is needed.

The low-lift push means have in preferable arrangement a form of the hinged legs which are tiltably placed on the sides of the permanent way. The legs are anchored by the sides of the permanent way and they are placed mutually opposite in distance pursuant to the dimensions of the cargo, whereby they can move alongside the permanent way so they can be positioned correctly relative to the cargo. The legs reach to the level of the connecting elements of the cargo; they do not fall between the rails. In inactive position these are tilted to the sides and do not interfere into the profile of the permanent way. After the rail car with the cargo stops, the legs are tilted to the cargo in such a way that the connecting elements on the upper side of the legs fall into the connecting openings in the cargo. After the lock holding the cargo on the rail car is unlocked, the cargo is released upwards from the connection with the rail car by means of extending and disengaging the legs.

The second zone has means for horizontal movement of the cargo, which can include fields with the wheels, guide rolls, traction belt and so on. The function of the second zone is to ensure the lateral movement from the first zone to the third zone without significant change of the height. The mostly horizontal movement of the cargo in the second zone is very energetically cheap and fast. The prevailing direction element of the horizontal movement is defined in the direction from the first zone to the second zone and then subsequently to the third zone or first zone, respectively, which means it moves perpendicularly to the permanent rail way. Pursuant to the position of the truck or rail car, respectively, the cargo in the second zone can move alongside the permanent way, too; the movement does not have to be only parallel with or only perpendicular to the line of the permanent way - it can be diagonal, too.

The two slidable, in parallel led jibs are part of the second zone according to this invention; the cargo is led by these jibs during the movement from the first zone to third zone. The number of the pairs of the jibs defines the number of the cargos which can be transloaded at the same time. The jibs have connecting elements whose shape, size and distribution corresponds to the standard for the connecting openings in the cargo; usually it is ISO standard for container transport.

The jib can be equipped by the lifting mechanism of the connecting elements. This mechanism can in the first zone serve the function of the low-lift push mean. The particular realization can have two connecting spikes led in vertical grooves of the jib, whereby the connecting spikes are part of the lifting mechanism. At the same time their rotational deposition is ensured; the rotation fixes the position of the spike in the connecting opening of the cargo. The lifting mechanism of the connecting elements serves the purpose of lifting of the cargo which has connecting openings available from front and back side; that is, from front and back front.

It is also preferable if the low-lift push means are parts of the jibs, which can be parts of the system alongside the telescopic legs. If the system has two groups of mutually independent low-lift means (for example extension push lags on the sides of the permanent ways and at the same time push cylinders in the jibs), it is possible to lift and release the cargo if it has a form of a container, but also if it has a form of a removable superstructure.

If the cargo has connecting elements which are available from the fronts (front and back wall), which is a case of all standardized containers, the jibs are led to these sides of the cargo, the connecting elements are connected with the connecting openings in the cargo, the connecting elements are lifted by means of a lifting mechanism and the cargo with the jibs is moved to the second zone. In such case an arrangement is also functional where the function of the low-lift push means is realized by the lifting mechanism of the connecting elements and no further low-lift push means are necessary. The connecting elements are parts of the jibs; they are connected with the cargo, they lift the cargo and subsequently the jibs with the cargo move to the second zone.

In case the cargo lacks the connecting openings available from the fronts (front and back wall) - which is a case of some removable superstructures - the cargo from the rail car is lifted by means of the push legs which are activated from the sides to the connecting openings and after the lifting the jibs are inserted below the cargo. Later the low-lift push means on the jibs can be used in such a way that they achieve the change of the height necessary for transloading to the truck. The removable superstructures have their own tiltable hinged legs which maintain the position of the cargo in the height necessary for the backing of the truck below the removable superstructure. In case of removable superstructures the manipulation with regard to the truck can be the same as is hitherto known; the low-lift push means on the jibs serve precisely this point. It is by means of them that the removable superstructure is placed on the tiltable legs. After the backing of the truck and lifting the tiltable legs are retracted (or folded) to the transport position and the removable superstructure is connected to the chassis of the truck. The unloading takes place in different order. The lifting of the removable superstructure by the crane is not ruled out either; the removable superstructure can be loaded directly to the jibs in second zone.

The low-lift push means therefore can have a form of, mainly, push legs alongside the permanent way and/or the form of the lifting mechanism of the connecting elements and/or the form of the push, telescopic hydraulic cylinders which run from the upper part of the jibs.

The jibs can be produced in such a way that during their overhanging to the first and third zone they present a fixed beam with the deposition in the second zone, or in the preferable arrangement the jibs have openings on the outer side of the first and third zone. In case of the first zone the support can be formed by the stable construction, for example a little wall, which is capable of transferring the pressure load. In the third zone the stable construction complicates the parking of the trucks; it is therefore preferable to use adjustable support for example in forms of tiltable or telescopic support. The jibs can be produced as telescopic with the slidable beam which ensures that during the movement of the cargo the transfer of the weight of the cargo on the support takes place during the whole movement to the second zone. The telescopic jib can then be retracted; the weight of the cargo in the second zone can be transferred to the means for the horizontal movement of the cargo. The movement can be led perpendicularly as well as in parallel with the rails. Before the cargo overhangs through the edge of the second zone, a jibs is extended on its other side to the support and then the jibs with the cargo moves alongside the beam.

The significant advantage of the proposed invention is the speed of the transloading with the energetically costly vertical lifting of the cargo. The system has a short transfer of the weight to the base of the individual zones; it does not require electronically oriented cranes or reelers, and it can be used for electrified rail roads, too. With the use of multiple pairs of jibs and the sufficient length of the zones it is possible to transload whole train at the same time.

The deficiencies in the prior state of the art are significantly remedied by the method of the transloading from of the cargo from the rail or to the rail, where the cargo moves horizontally from the first zone with the permanent way through the second zone with the means for a horizontal movement to the third zone with the parked truck or to other first zone with the rail car or moves in opposite direction, whereby before the horizontal movement the cargo is lifted to the height not surpassing 500 mm in order to release the connections with the rail car or a truck, according to this invention, which essence lies in the fact that the cargo is first in the first zone lifted by the low-life push means (or devices) which act from below. This can concern a push legs moved from the side or the lifting mechanism of the connecting elements. The cargo is then connected to the pair of the jibs which in their outermost position overhang to from the second zone to the first zone; by means of the jibs the cargo is horizontally moved to the position in the opposite zone where the cargo is released from the connection with the jibs.

The advantage of the invention is the possibility of automatization of the transloading of the cargo. The trucks can enter into the third zone one behind each other in the street which is from one side delimited by the means for the horizontal movement and from the other side by the support for the jibs, or the trucks can arrive to the designed place from the side, by the retracted (or folded) support. The differences between the height of the placement of the cargo on the rail car and the height of the placement on the truck can be eliminated by the fact that the means for horizontal movement in the second zone include the height setting, for example by means of hydraulic lifters. The change of the height setting sets the cargo into sufficient height.

### Description of drawings

The invention is further disclosed by drawings 1 to 25. The depicted ratio of sizes of individual zones, the cross-sections of the beams and the shapes of elements, the number of depicted cargos, rail cars and trucks is only illustrative and cannot be interpreted as limiting the scope of protection.
Figure 1 is a groundplan view of the rail trans-shipment station with the system according to this invention. The supports in the third zone are depicted as inactive which allows for the trucks to approach from the side.
Figure 2 is a side view of the three zones in the system from the back view. The cargo is depicted on the truck as well as on the rail car.
Figure 3 depicts the cargo in form of an ISO container and the connecting openings in the corners.
Figure 4 are two views of the jib with the lifting mechanism of the connecting element and with the push cylinder for lifting of the cargo placed on the jib without the connecting elements engaged.
Figure 5 depicts various details of various positions of the connecting elements in the jib and their interaction with the openings in the cargo.
Figures 6 to 7 depicts the positions of the cargo (mainly container) moving to the truck.
Figure 8 depicts the low-lift push means and their interaction with the cargo on the rail car.
Figure 9 is a view of the cargo placed on the means for horizontal movement in parallel with the permanent way of the pair of rails.

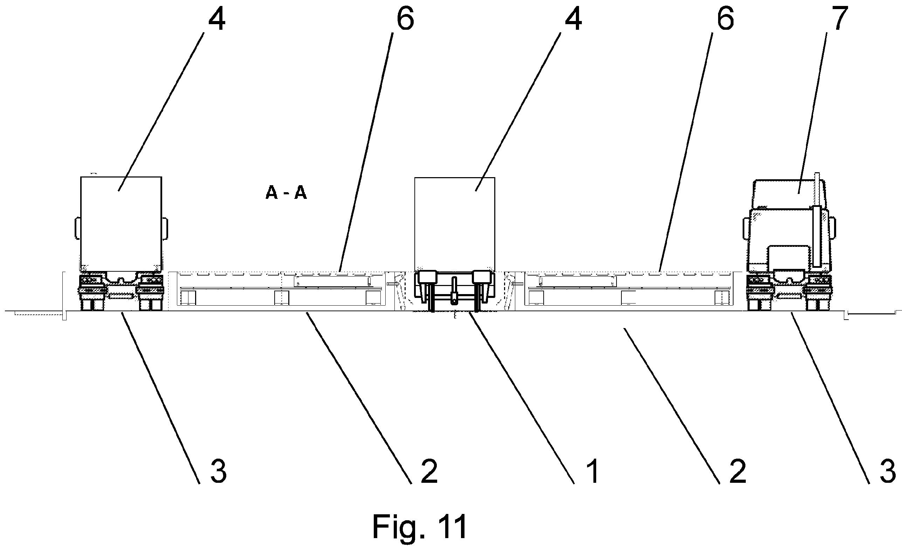

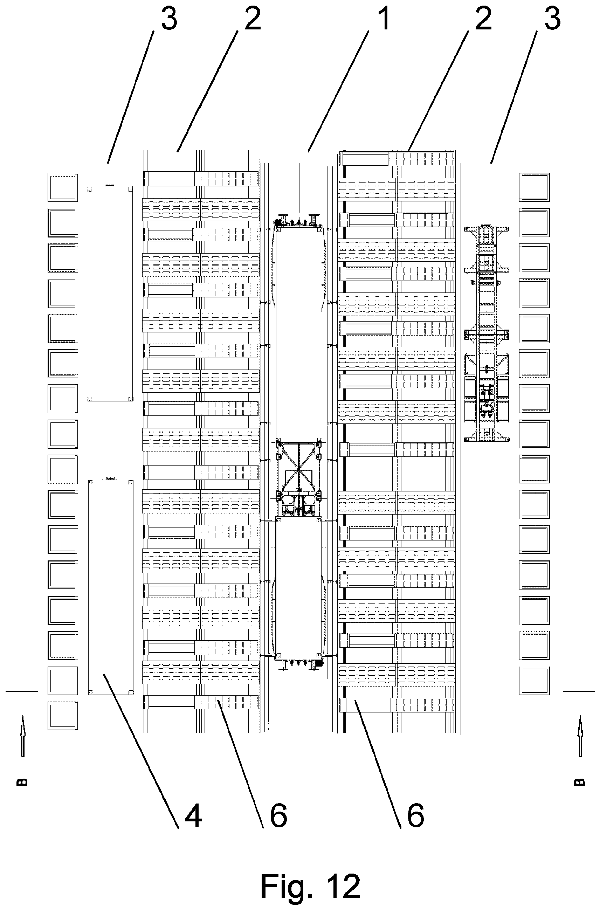

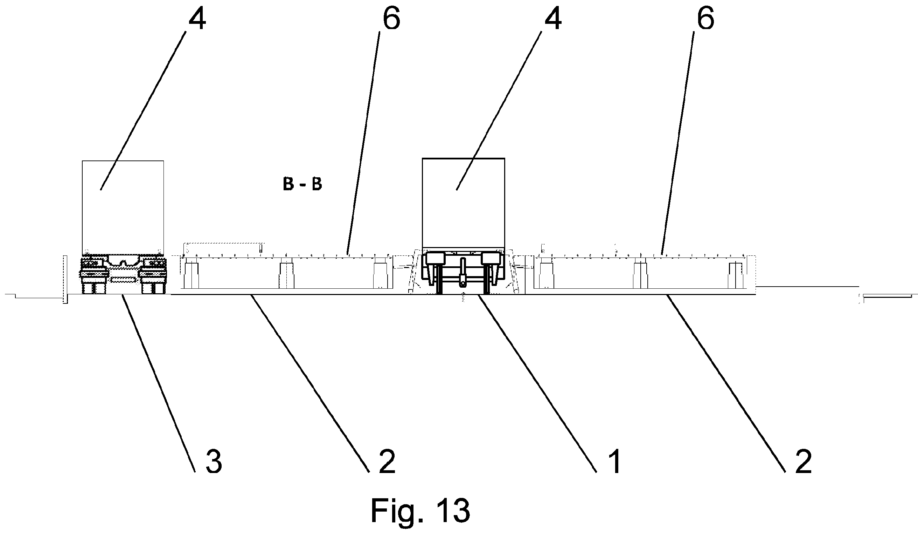

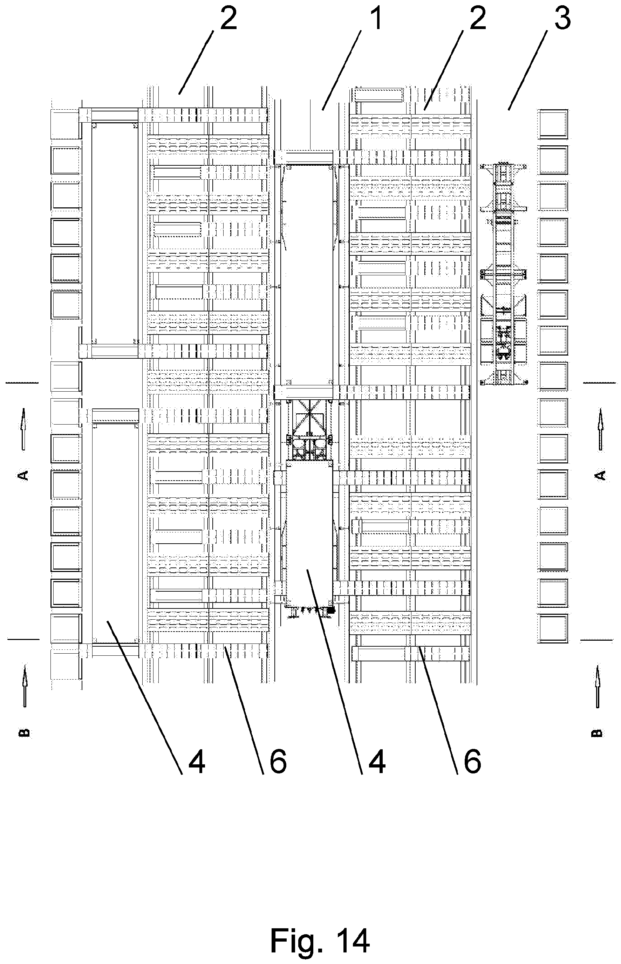

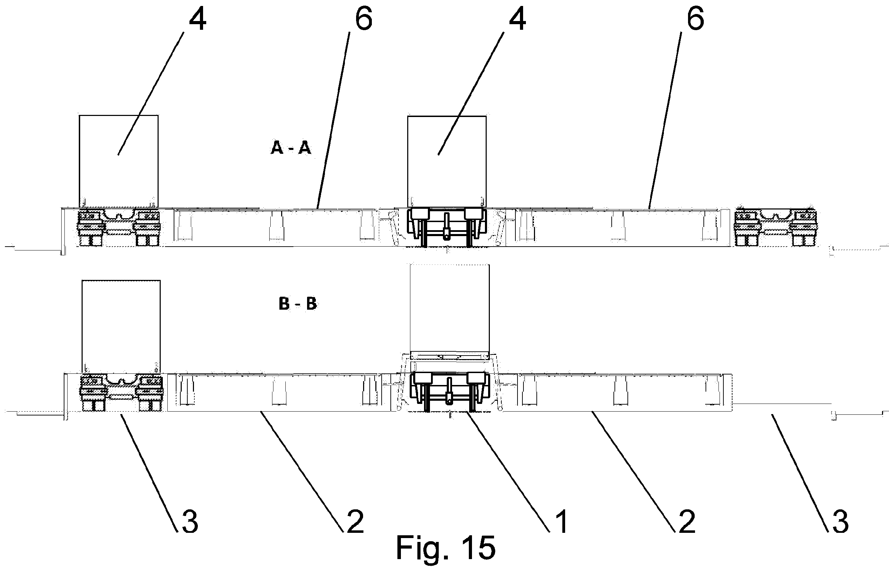

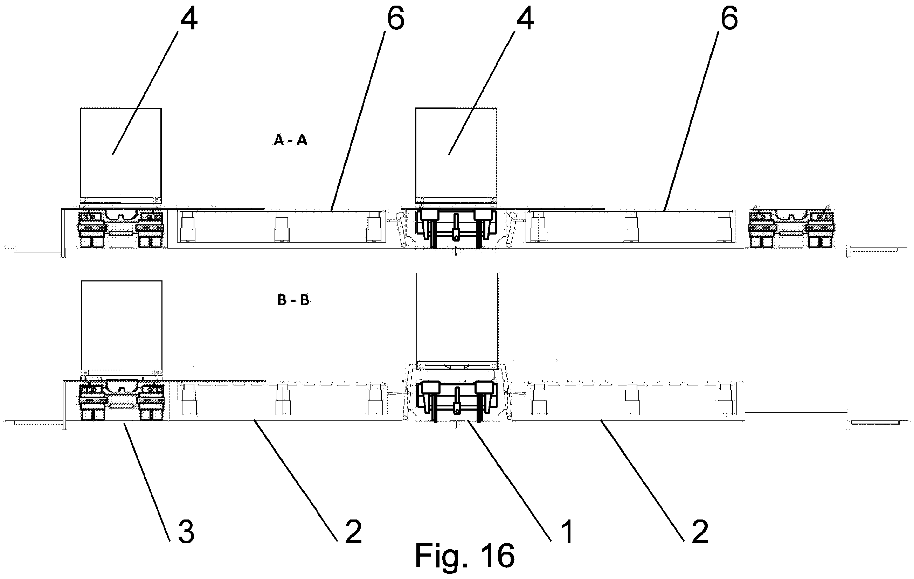

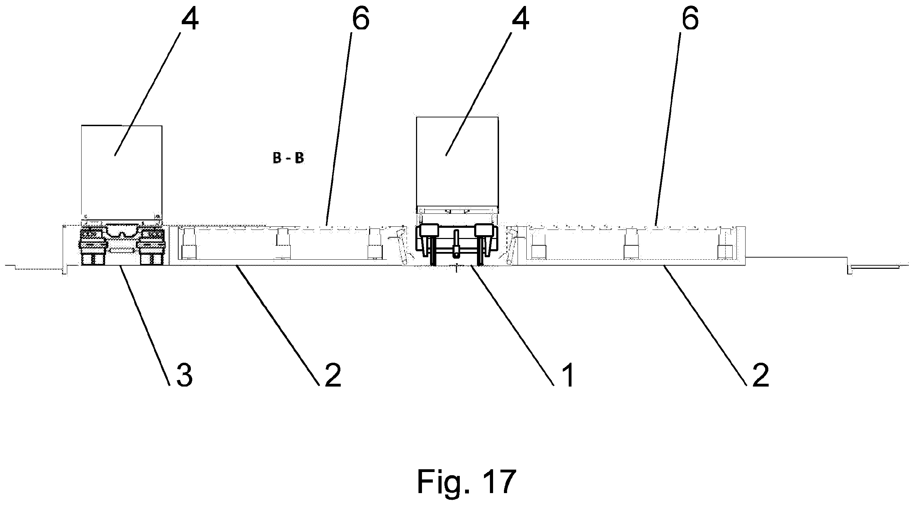

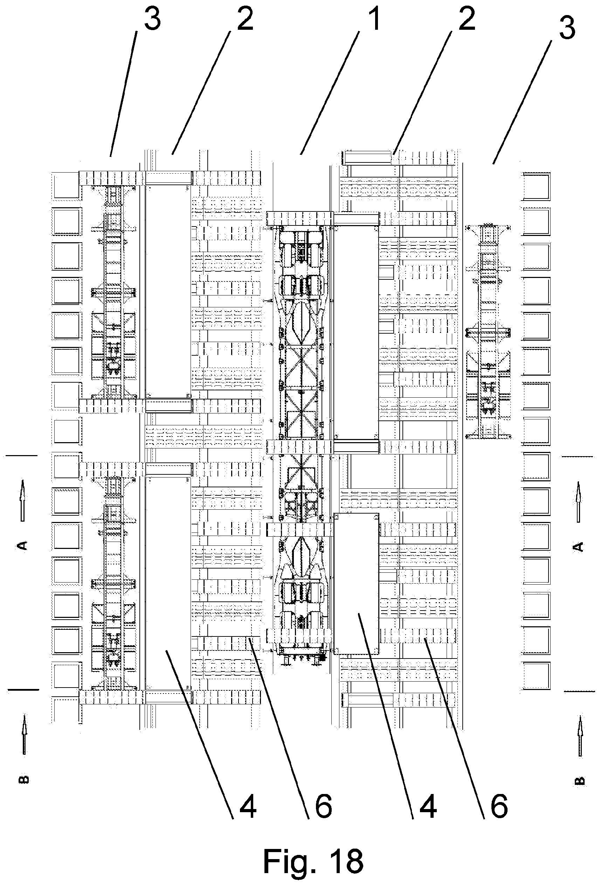

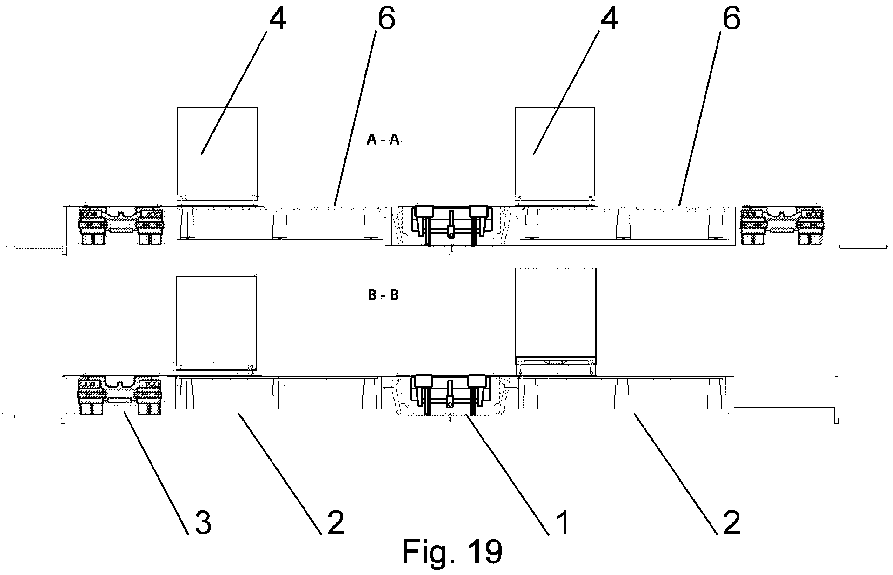

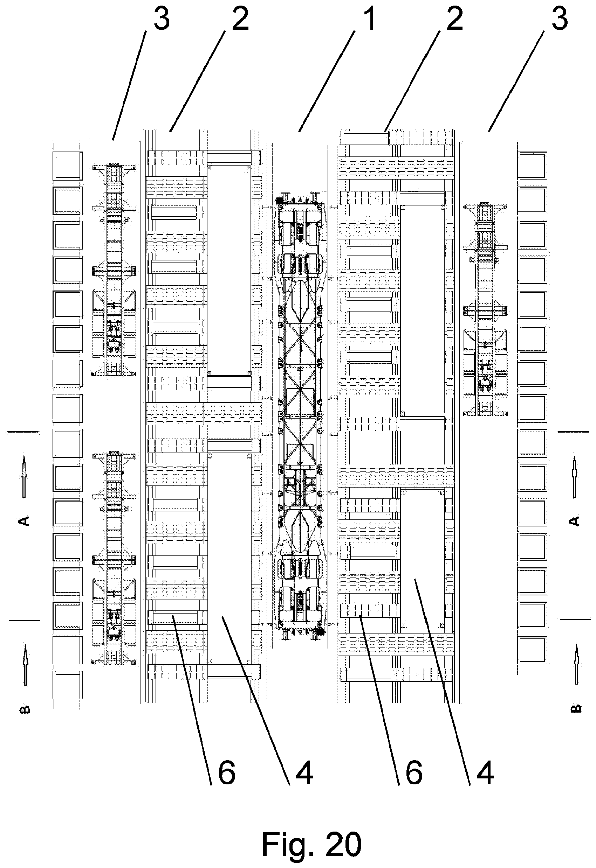

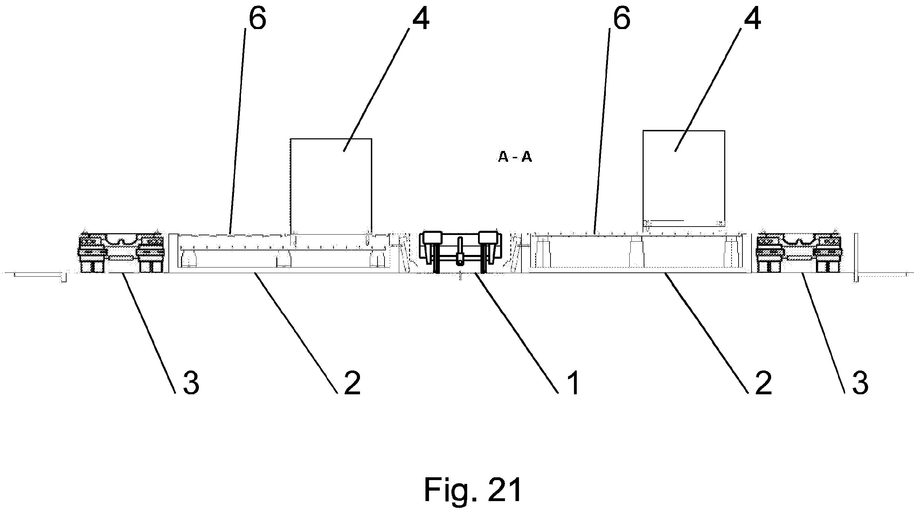

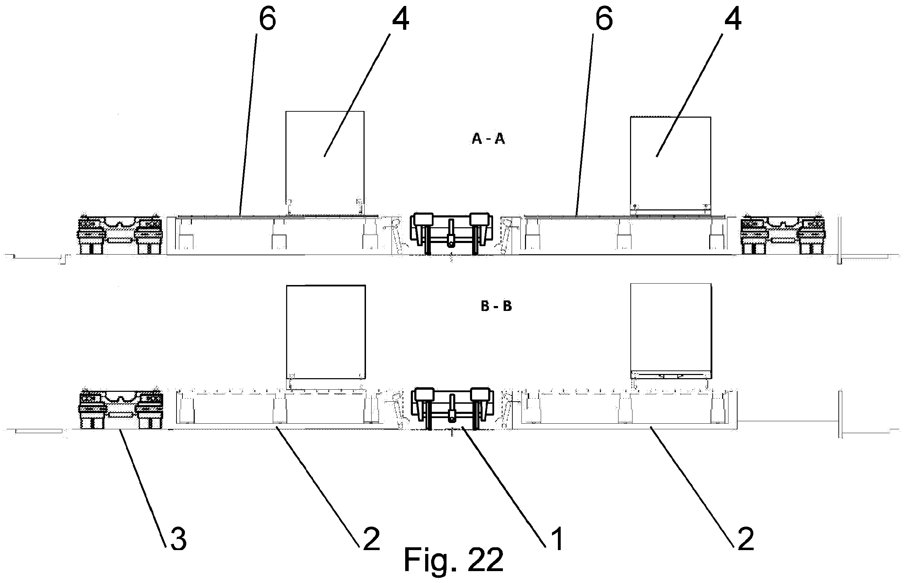

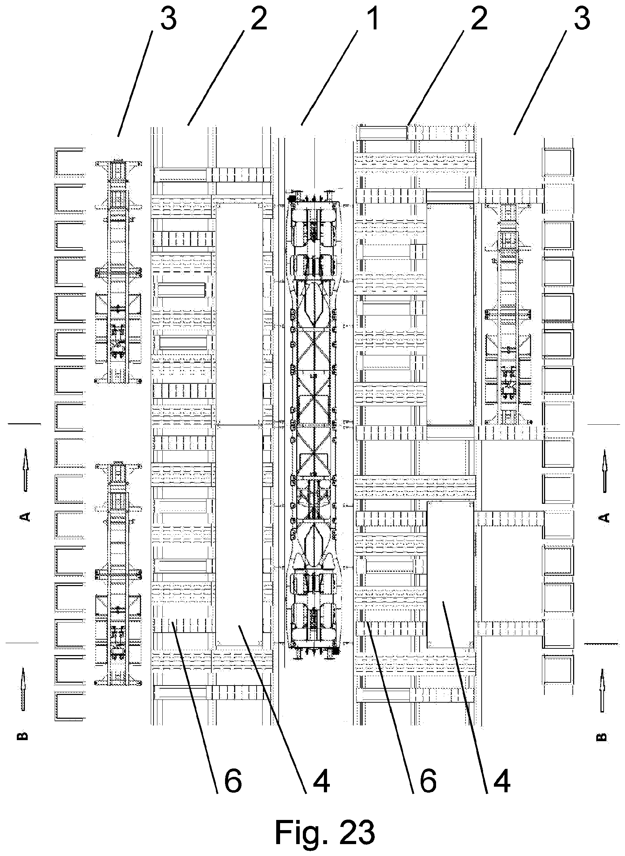

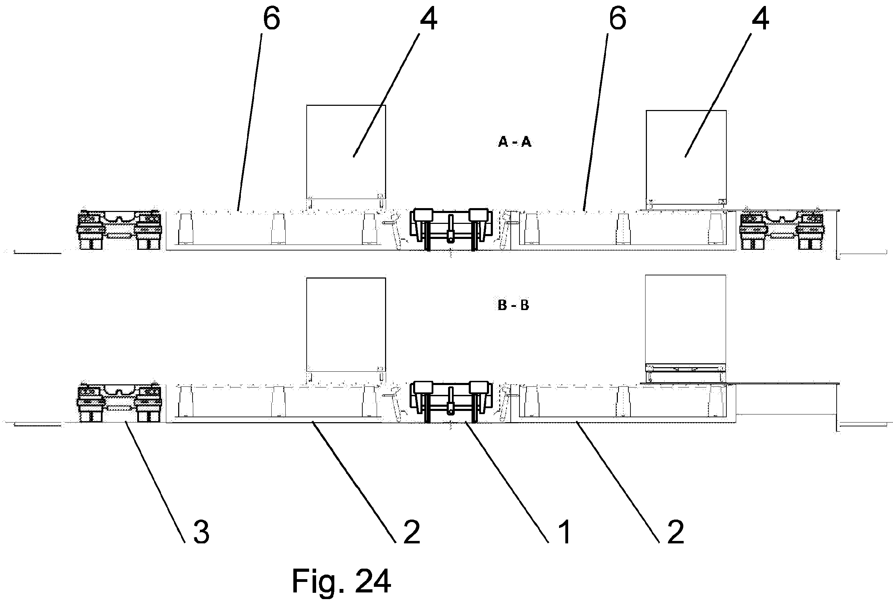

Figures 10 to 25 depict various systems with second and third zones and with various positions of the cargo. The cross-sections A-A - depicted on the figures - depict the phases of loading and unloading of the container with the use of the parked container trailer. The figures with cross-sections B-B depicted the phases of loading and unloading of the removable superstructure in the third zone. Figure 13 is a view of the parked truck.

### Examples of realization

### Example 1

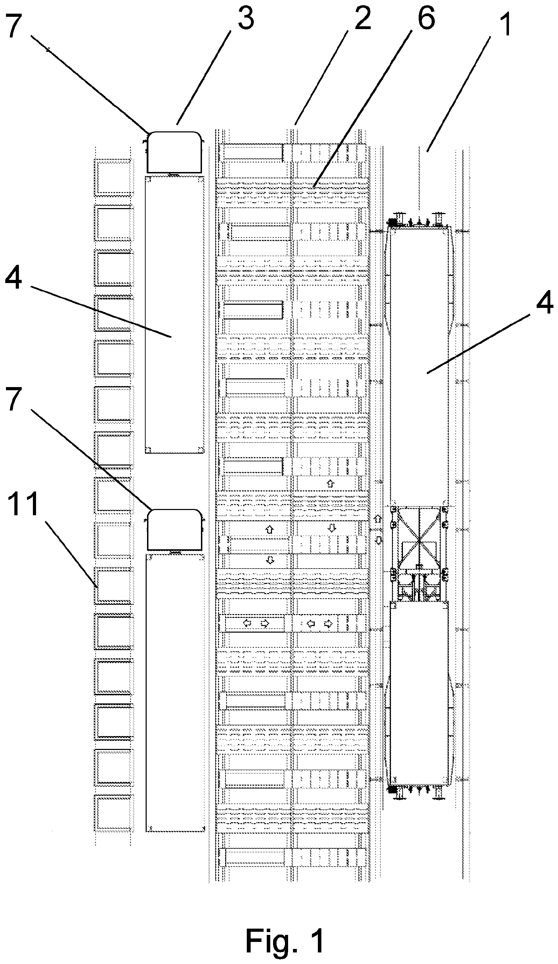

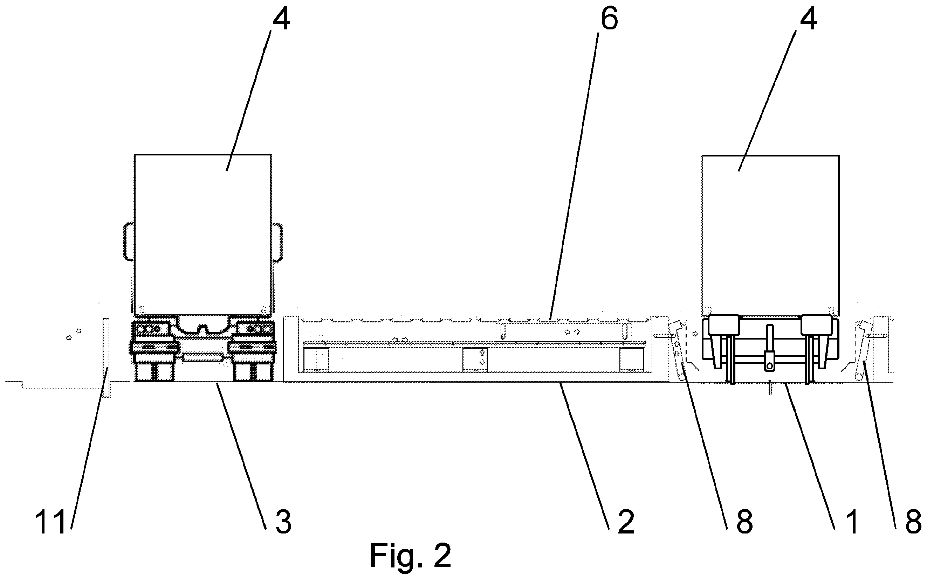

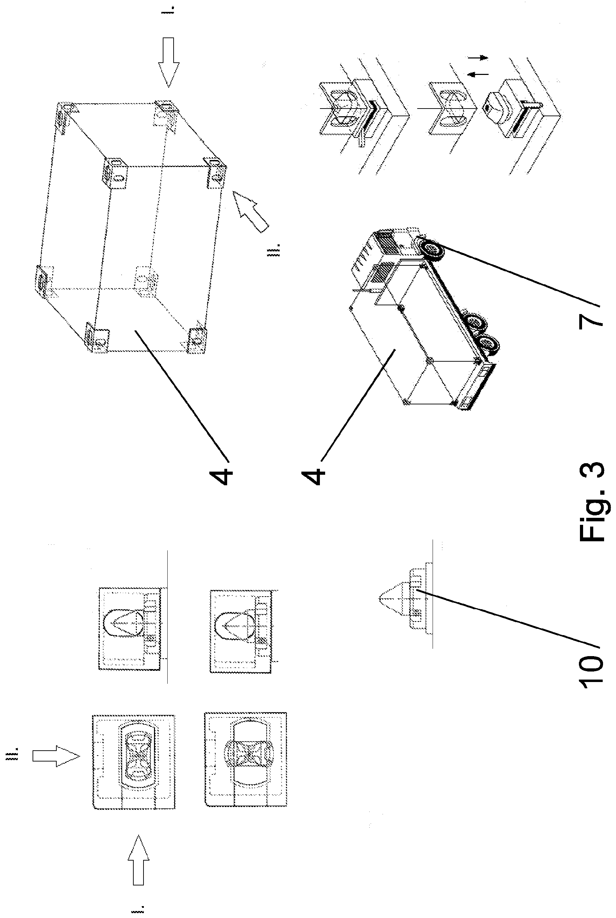

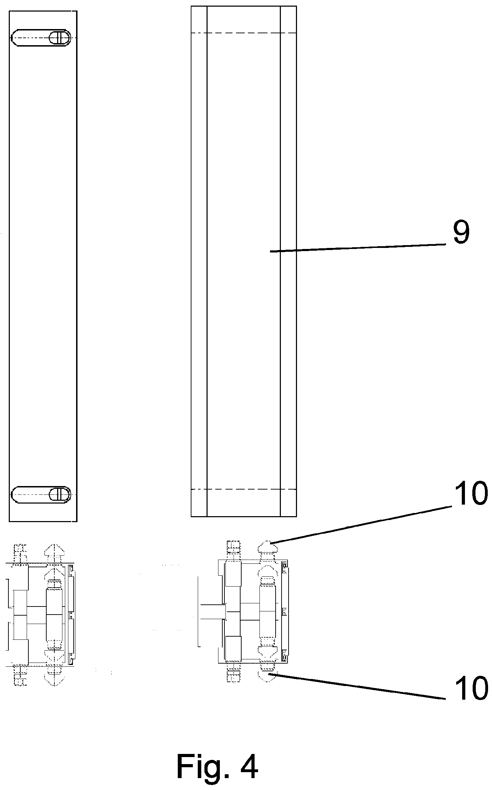

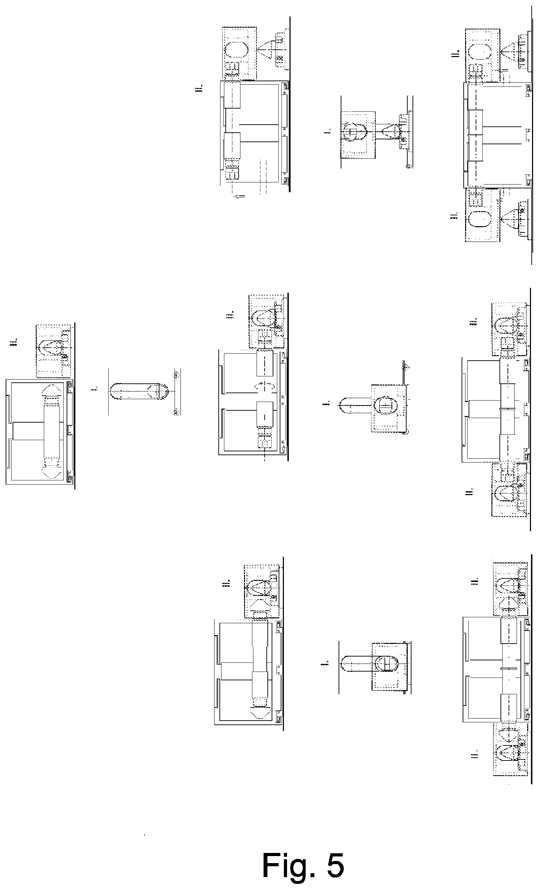

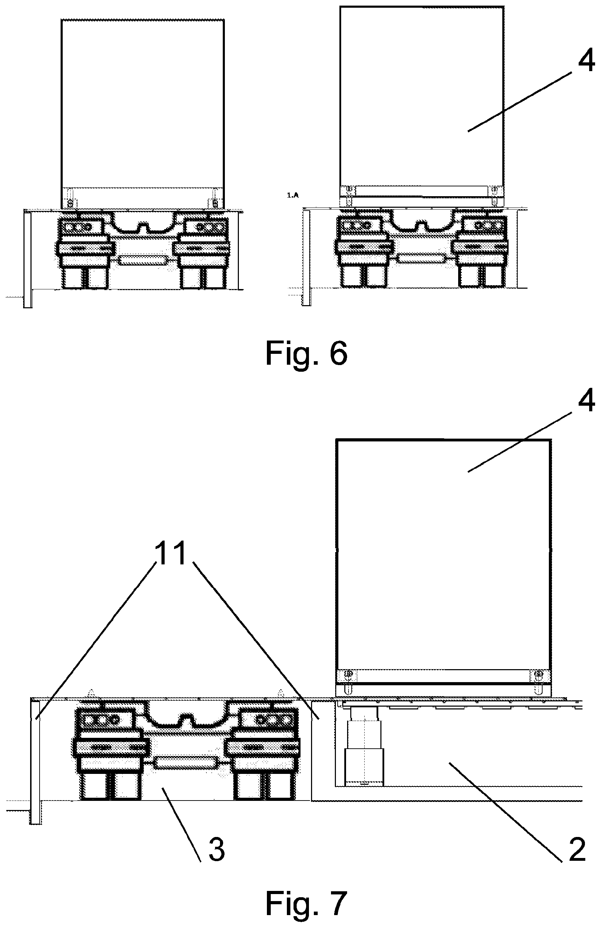

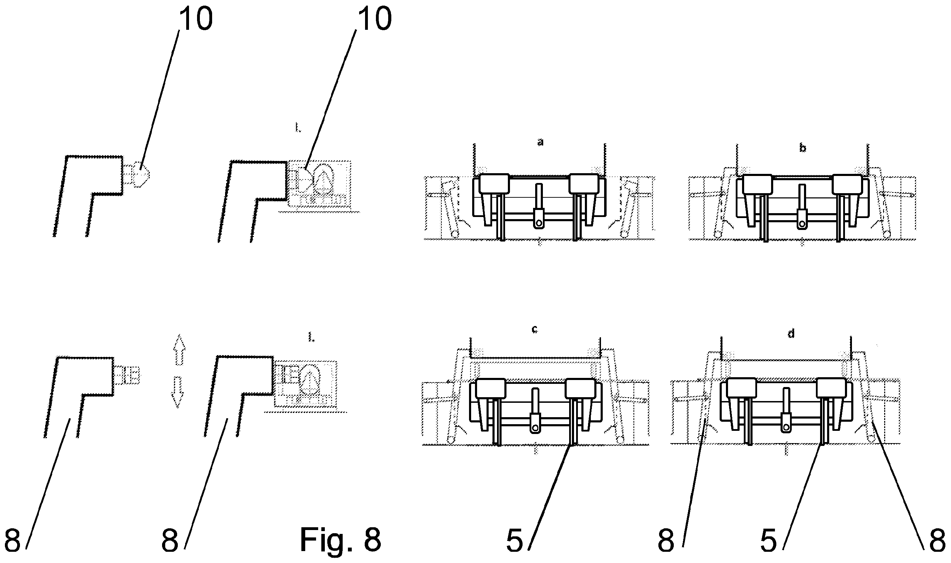

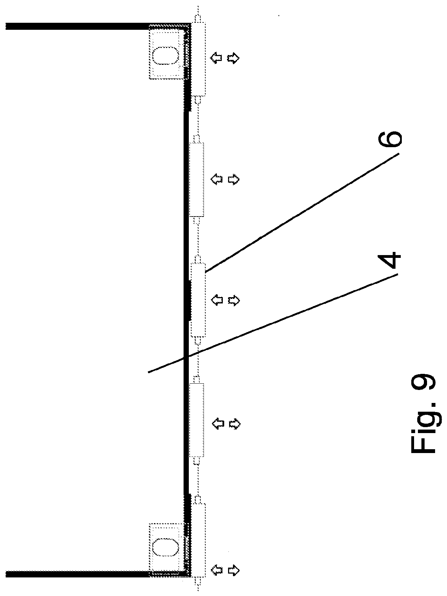

In this example according to figures 1 to 9 the system has a first zone 1, one second zone 2 and one third zone 3. In the first zone 1 there is one pair of rails. By the sides of the permanent way 5 there are concrete walls which form the supports 11 and which reach the height of the lower level of the cargo 4 placed on the rail car.

The low-lift push means 8 are placed on the rotational studs by the walls; these means 8 have draw-out legs. The legs in the bottom part have connecting elements 10 for connection with the connecting openings of the cargo 4.

After the train with the cargo 4 in form of ISO containers stops and the rail cars are locked against the movement, the cargo 4 is released from the locks. The low-lift push means 8 are tilted to the cargo 4 from the sides and the cargo 4 is lifted by approximately 200 mm, which releases the cargo 4 from the spikes which are anchored in the chassis of the rail car.

The jibs 9 are extended from the second zone 2 to the support 11; the cargo 4 is connected to the jibs 9 and together with the jibs 9 it is moved to the second zone 2. In the second zone 2 the cargo 4 together with the jibs 9 is moved on the means 6 for the horizontal movement, which are in this example formed by a system of guide wheels. The guide wheels are placed in the construction of the table which is height adjustable by means of hydraulic cylinders. The height of the table is set pursuant to the height of the particular truck 7 which is parked in the third zone 3.

After braking of the truck 7 to stop in the third zone 3 the supports 11 are tilted out to the active vertical position. The cargo 4 is moved to the edge of the second zone 2 in the vicinity of the truck 7. The beams are telescopically extended from the jibs 9 and placed on the supports 11. The cargo is now moved to the chassis of the truck 7 where it is left and released from the connection in the jibs 9.

### Example 2

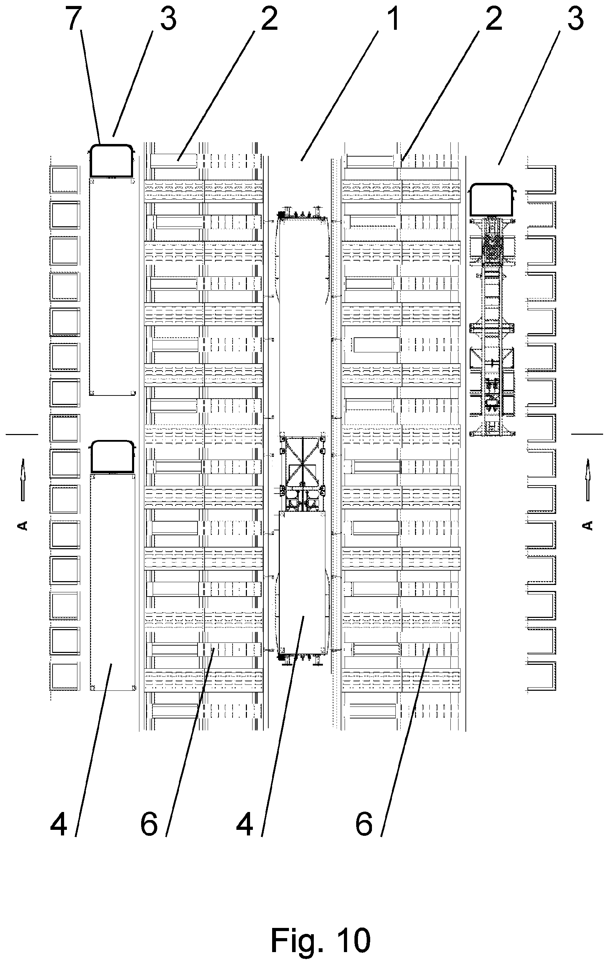

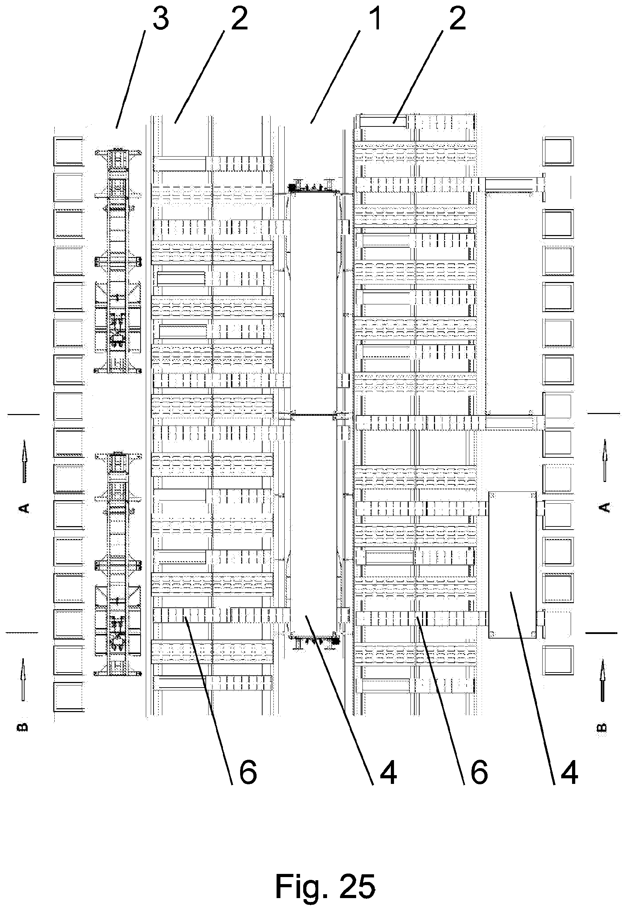

System in this example according to figures 10 and 25 differs from the example 1 only in the fact that it has two second zones 2 on both sides of the first zone 1 and two third zones 3, which creates a possibility for transloading on both sides of the permanent way 5.

In case of the transloading of the cargo 4 in form of a removable superstructure which has its own legs a method can be chosen where the cargo 4 is in the second zone 2 placed from the jibs 9 to the hydraulic lifters. The cargo 4 is lifted and placed from outside to the jibs 9 with which it subsequently moves to the third zone 3. There the legs of the superstructure are tilted out and the superstructure is placed on legs. The truck 7 loads the removable superstructure by means of a vertical lift from the ground. This method allows transloading of removable superstructures.

### Example 3

The system differs from the example 1 in the fact that the second zone 2 neighbours two first zones 1. The cargo 4 is transloaded between two rail cars which are parked on the parallel rails; the second zone 2 is produced between the rails by means 6 for horizontal movement of the cargo 4.

### Example 4

The cargo 4 in form of a removable superstructure is released from the connection with the rail car. The low-lift push means 8 are led to the sides and these means 8 move alongside the permanent way 5 to the position which corresponds to the connecting elements of the removable superstructure. The low-lift push means 8 have legs by which the cargo 4 is lifted and two jibs 9 move below the lifted cargo 4. The cargo 4 is moved by means of jibs 9 to the second zone 2 and then subsequently to third zone 3. There on the removable superstructure the hinged legs are tilted out and by lowering in the push cylinders on the jibs 9 the removable superstructure is placed on its own legs. Then the truck 7 backs under the cargo 4 and the cargo 4 is connected to the truck 7; the foldable legs are folded into the horizontal transport position.

### Industrial applicability

The industrial applicability is obvious. According to this invention it is possible to industrially and repeatedly produce and use the system for transloading of the cargo from the rail to the trucks or vice versa or to transload the cargo between the rails.

### List of related symbols

| | | | |
|---|---|---|---|
| 1 - | first zone | 7 - | truck |
| 2 - | second zone | 8 - | low-lift push mean |
| 3 - | third zone | 9 - | jib |
| 4 - | cargo | 10 - | connecting elements |
| 5 - | permanent way | 11 - | support |
| 6 - | mean for horizontal movement | | |

| | | | |
|---|---|---|---|
| UTI - intermodal transfer unit IN.HO.TRA - Interoperable Intermodal Horizontal Transhipment ISO - International Organization for Standardization | | | |

## Claims

1. A system for a transloading of a cargo from a rail or to the rail, comprising a first zone (1) with a permanent way (5) with a pair of rails and a second zone (2) with means (6) for a horizontal movement of the cargo (4), whereby the system includes lifting means and the cargo (4) has normalized connecting openings wherein
the first zone (1) is equipped with at least one pair of low-lift push means (8) for lifting the cargo, which are placed opposite to each other in relation to the permanent way (5) and are movably placed in a distance pursuant to the width of the cargo (4), and
the second zone (2) has at least two slidably and in parallel led jibs (9) which in one outermost position interfere in the first zone (1),
whereby the jibs (9) are equipped with connecting elements (10) for a connection with the cargo (4) through its connecting openings and the jibs (9) have a mutually adjustable distance corresponding to a length of the cargo (4)
**characterized by the fact, that**
the system has a third zone (3) for parking at least one truck (7) and the jibs (9) in second outermost position interfere in the third zone (3),
wherein the jibs (9) are telescopic and have a movable beam and the cargo is led by the jibs during the movement from the first zone (1) to the third zone (3),
at the edge of the first zone (1) there is a support (11) for a placement of the jibs (9)
extended from the second zone (2) above the permanent way (5) and at the edge of the third zone (3) there is a support (11) for the placement of the jibs (9) extended from the
second zone (2) above a chassis of the truck (7), the support (11) at the edge of the third zone is sliding or folding and in an inactive position is retracted or folded to a ground of the third zone (3).

2. The system for the transloading of the cargo from the rail or to the rail according to the claim 1 **is characterized by the fact, that** it has two first zones (1) with the permanent way (5) and between the two first zones (1) there is the second zone (2), whereby the jibs (9) in outermost positions interfere to the both first zones (1).

3. The system for the transloading of the cargo from the rail or to the rail according to the claim 1 **is characterized by the fact, that** it has two second zones (2), each by each side of the first zone (1), and it has two third zones (3) placed at the outer boundaries of the second zones (2) and the jibs in their second outermost positions interfere to the third zones (3).

4. The system for the transloading of the cargo from the rail or to the rail according to any of the claims 1 to 3 **is characterized by the fact, that** the low-lift push means (8) are from below led on the sides of the permanent way (5); they have tiltable legs, whereby the legs reach to a level of the connecting openings in the cargo (4) and in an inactive position they are retracted to sides outside a profile of the permanent way (5).

5. The system for the transloading of the cargo from the rail or to the rail according to any of the claims 1 to 3 **is characterized by the fact, that** the low-lift push means (8) are parts of the jibs (9), preferably they involve push hydraulic cylinders stemming our from an upper part of the jibs (9).

6. The system for the transloading of the cargo from the rail or to the rail according to any of the claims 1 to 3 and the claim 5 **is characterized by the fact, that** the low-lift push means (8) involve a lifting mechanism of the connecting elements (10) which is part of the jibs (9).

7. The system for the transloading of the cargo from the rail or to the rail according to any of the claims 1 to 6 **is characterized by the fact, that** the mean (6) for the horizontal movement of the cargo (4) involves guiding wheels and/or guide rolls and/or belts.

8. The system for the transloading of the cargo from the rail or to the rail according to any of the claims 1 to 7 **is characterized by the fact, that** the mean (6) for the horizontal movement of the cargo (4) is height adjustable, preferably the mean (6) for the horizontal movement of the cargo (4) has hydraulic lifters for a change of the height of the horizontal movement of the cargo (4).

9. A method for a transloading of a cargo from a rail or to the rail, where the cargo (4) is horizontally moved from a first zone (1) with a permanent way (5) through a second zone (2) with means (6) for a horizontal movement of the cargo (4) to a third zone (3) with a parked truck (7), or to the first zone (1) with a rail car, or the cargo (4) is moved , from the third zone (3) with a parked truck (7) through a second zone (2) with means (6) for a horizontal movement of the cargo (4) to first zone (1) with a permanent way (5), whereby before the horizontal movement the cargo (4) is lifted to a height less than 500 mm in order to release a connection with the rail car or with the truck (7), wherein the cargo (4) in the first zone (1) is lifted by low-lift push means (8), then it is connected to a pair of jibs (9), which in an outermost position interfere from the second zone (2) to the first zone (1), **is characterized by the fact, that**
by means of the jibs (9) the cargo (4) is horizontally transferred to a position in the next zone,
where the cargo (4) is released from a connection with the jibs (9),
whereby the cargo (4) in the first zone (1) is lifted by the low-lift push means which are tilted to an active position to the cargo (4) from the sides of the permanent way (5), wherein the jibs (9) are telescopic and have a movable beam and the cargo is led by the jibs during the movement from the first zone (1) to the third zone (3), at the edge of the first zone (1) there is a support (11) for a placement of the jibs (9) extended from the second zone (2) above the permanent way (5) and at the edge of the third zone (3) there is a support (11) for the placement of the jibs (9) extended from the second zone (2) above a chassis of the truck (7), the support (11) at the edge of the third zone is sliding or folding and in an inactive position is retracted or folded to a ground of the third zone (3).

10. The method of the transloading of the cargo from the rail or to the rail according to the claim 9 **is characterized by the fact, that** the cargo (4) is by its lower part attached to the jibs (9) by means of standardized connecting openings.

11. The method of the transloading of the cargo from the rail or to the rail according to any of the claims 9 or 10 **is characterized by the fact, that** the cargo (4) in the first zone (1) is lifted by a lifting mechanism of connecting elements (10) which are firstly inserted to the connecting openings in the cargo (4).

12. The method of the transloading of the cargo from the rail or to the rail according to any of the claims 10 or 11 **is characterized by the fact, that** the truck (7) enters the third zone (3) through the retracted or sloped support (11).

## Patentansprüche

1. Ein System zum Umladen von Lasten von oder auf die Bahn, das einen ersten Bereich (1) mit dem Gleisoberbau (5) mit einem Schienenpaar und einen zweiten Bereich (2) mit den Mitteln (6) zum horizontalen Bewegen der Lasten (4) umfasst, wobei das System die Hebemittel umfasst und die Lasten (4) standardisierte Verbindungslöcher aufweisen, wobei der erste Bereich (1) mit mindestens einem Paar von Niederhub-Schubmitteln (8) zum Anheben der Lasten versehen ist, die in einem der Breite der Lasten (4) entsprechenden Abstand zueinander beweglich angeordnet sind,
der zweite Bereich (2) mindestens zwei verschiebbar und parallel geführte Ausleger (9) hat, die in einer Endlage in den ersten Bereich (1) hineinragen, wobei die Ausleger (9) mit den Befestigungen (10) zur Verbindung mit den Lasten (4) über ihre Befestigungslöcher versehen sind und die Ausleger (9) einen einstellbaren Abstand untereinander haben, der der Länge der Lasten (4) entspricht,
**gekennzeichnet dadurch, dass**
das System einen dritten Bereich (3) zur Beistellung mindestens eines Lastwagens (7) aufweist und die Ausleger (9) in der zweiten Endlage in den dritten Bereich (3) hineinragen,
wobei die Ausleger (9) ausziehbar sind und einen Gleitbalken aufweisen und die Lasten beim Bewegen von dem ersten Bereich (1) in den dritten Bereich (3) durch die Ausleger (9) geführt werden,
am Rand des ersten Bereichs (1) sich eine Stütze (11) zum Aufsetzen der vom zweiten Bereich (2) über dem Gleisoberbau (5) ausgefahrenen Ausleger (9) befindet und am Rand des dritten Bereichs (3) sich eine Stütze (11) zum Aufsetzen der vom zweiten Bereich (2) über dem Fahrgestell des Lastwagens (7) ausgefahrenen Ausleger (9) befindet,
die Stütze (11) am Rand des dritten Bereichs (3) ausziehbar oder klappbar ist und in der inaktiven Stellung zum Untergrund des dritten Bereichs (3) eingezogen oder eingeklappt ist.

2. Das System zum Umladen von Lasten von oder auf die Bahn gemäß Anspruch 1, **gekennzeichnet dadurch, dass** es zwei erste Bereiche (1) mit dem Gleisoberbau (5) hat und zwischen den beiden ersten Bereichen (1) sich ein zweiter Bereich (2) befindet, wobei die Ausleger (9) in den Endlagen in beide erste Bereiche (1) hineinragen.

3. Das System zum Umladen von Lasten von oder auf die Bahn gemäß Anspruch 1, **gekennzeichnet dadurch, dass** es zwei zweite Bereiche (2) auf beiden Seiten des ersten Bereiches (1) hat und zwei dritte Bereiche (3) aufweist, die sich an den äußeren Grenzen der zweiten Bereiche (2) befinden und die Ausleger (9) in der zweiten Endlage in den dritten Bereich (3) hineinragen.

4. Das System zum Umladen von Lasten von oder auf die Bahn nach beliebigem der Ansprüche 1 bis 3, **gekennzeichnet dadurch, dass** die Niederhub-Schubmittel (8) von unten entlang der Seiten des Gleisoberbaus (5) geführt werden, aufklappbare Füße aufweisen, wobei die Füße bis auf die Höhe der Befestigungslöcher der Lasten (4) reichen und in der inaktiven Lage seitlich aus dem Profil des Gleisoberbaus (5) herausgeklappt sind.

5. Das System zum Umladen von Lasten von oder auf die Bahn nach beliebigem der Ansprüche 1 bis 3, **gekennzeichnet dadurch, dass** die Niederhub-Schubmittel (8) Bestandteil der Ausleger (9) sind, vorteilhaft die Hydraulikdruckzylinder umfassen, die von der Oberseite der Ausleger (9) herausgehen.

6. Das System zum Umladen von Lasten von oder auf die Bahn nach beliebigem der Ansprüche 1 bis 3 und dem Anspruch 5, **gekennzeichnet dadurch, dass** die Niederhub-Schubmittel (8) einen Hebemechanismus der Befestigungsmittel (10) umfasst, der Bestandteil der Ausleger (9) ist.

7. Das System zum Umladen von Lasten von oder auf die Bahn nach beliebigem der Ansprüche 1 bis 6, **gekennzeichnet dadurch, dass** das Mittel (6) zum horizontalen Bewegen der Lasten (4) die Führungsräder und/oder Umlenkrollen und/oder Bänder umfasst.

8. Das System zum Umladen von Lasten von oder auf die Bahn nach beliebigem der Ansprüche 1 bis 7, **gekennzeichnet dadurch, dass** das Mittel (6) zum horizontalen Bewegen der Lasten (4) höhenverstellbar ist, vorteilhaft weist das Mittel (6) zum horizontalen Bewegen der Lasten hydraulische Heber zur Veränderung der Höhe beim horizontalen Bewegen der Lasten (4) auf.

9. Ein Verfahren zum Umladen von Lasten von oder auf die Bahn, bei dem die Lasten (4) horizontal von dem ersten Bereich (1) mit dem Gleisoberbau (5) durch den zweiten Bereich (2) mit den Mitteln (6) zum horizontalen Bewegen der Lasten (4) in den dritten Bereich (3) mit einem beigestellten Lastwagen (7) oder in den ersten Bereich (1) mit einem Eisenbahnwagen bewegt werden oder die Lasten (4) werden von dem dritten Bereich (3) mit dem beigestellten Lastwagen (7) durch den zweiten Bereich (2) mit den Mitteln (6) zum horizontalen Bewegen der Lasten (4) in den ersten Bereich (1) mit dem Gleisoberbau (5) bewegt, wobei die Lasten (4) vor dem horizontalen Bewegen auf eine Höhe von nicht mehr als 500 mm angehoben werden, um die Verbindung mit dem Wagen oder Lastwagen (7) zu lösen, wobei die Lasten (4) in dem ersten Bereich (1) mit Niederhub-Schubmitteln (8) angehoben werden, anschließend mit einem Paar von Auslegern (9) verbunden werden, die in der Endlage von dem zweiten Bereich (2) bis in den ersten Bereich (1) hineinragen, **gekennzeichnet dadurch, dass**
mittels Ausleger (9) die Lasten (4) horizontal in eine Position im anschließenden Bereich transportiert werden, wo die Lasten (4) aus der Verbindung mit den Auslegern gelöst werden,
wobei die Lasten in dem ersten Bereich (1) mittels Niederhub-Schubmittel angehoben werden, die in aktive Lage zu Lasten (4) von den Seiten des Gleisoberbaus (5) aufgeklappt sind,
wobei die Ausleger (9) ausziehbar sind und einen Gleitbalken aufweisen und die Lasten beim Bewegen von dem ersten Bereich (1) in den dritten Bereich (3) durch die Ausleger (9) geführt werden,
am Rand des ersten Bereichs (1) sich eine Stütze (11) zum Aufsetzen der vom zweiten Bereich (2) über dem Gleisoberbau (5) ausgefahrenen Ausleger (9) befindet und am Rand des dritten Bereichs (3) sich eine Stütze (11) zum Aufsetzen der vom zweiten Bereich (2) über dem Fahrgestell des Lastwagens (7) ausgefahrenen Ausleger (9) befindet,
die Stütze (11) am Rand des dritten Bereichs (3) ausziehbar oder klappbar ist und in der inaktiven Stellung zum Untergrund des dritten Bereichs (3) eingezogen oder eingeklappt ist.

10. Die Verfahren zum Umladen von Lasten von oder auf die Bahn gemäß Anspruch 9, **gekennzeichnet dadurch, dass** die Lasten (4) an den Auslegern (9) mittels standardisierte Befestigungslöcher über den Unterteilt befestigt werden.

11. Die Verfahren zum Umladen von Lasten von oder auf die Bahn nach beliebigem der Ansprüche 9 oder 10, **gekennzeichnet dadurch, dass** die Lasten (4) in dem ersten Bereich (1) mittels Hebemechanismus der Befestigungsmittel (10) angehoben werden, die zuvor in die Befestigungslöcher der Lasten (4) eingeführt werden.

12. Die Verfahren zum Umladen von Lasten von oder auf die Bahn nach beliebigem der Ansprüche 10 oder 11, **gekennzeichnet dadurch, dass** der Lastwagen (7) durch die eingeklappte oder eingefahrene Stütze (11) in den dritten Bereich (3) gelangt.

## Revendications

1. Un système de transbordement de marchandise depuis ou vers un chemin de fer, comprenant une première zone (1) avec un dessus de rail (5) y compris une paire de rails, et une deuxième zone (2) avec des moyens (6) pour le mouvement horizontal de cargaison (4), le système comprenant des moyens de levage et la cargaison (4) ayant des trous de connexion normalisés, étant donné que
la première zone (1) est équipée d'au moins une paire de moyens de levage bas (8) pour soulever la charge, posées de manière mobile opposable à une distance en fonction de la largeur de la cargaison (4),
la deuxième zone (2) comporte au moins deux portails (9) coulissantes, guidées parallèlement, qui dans une position extrême s'étendent dans la première zone (1),
tandis que les portails (9) sont équipées d'éléments de connexion (10) pour la connexion à la cargaison (4) à travers ses trous de connexion et portails (9) ont une distance réglable l'une par rapport à l'autre correspondant à la longueur de la cargaison (4)
**caractérisé en ce que**
le système comporte une troisième zone (3) de calage d'au moins un camion (7) et des portails (9) en deuxième position extrême s'étendent dans la troisième zone (3),
tandis que les portails (9) sont télescopiques et à poutre coulissante et la cargaison est guidée par les portails (9) lors du déplacement de la première zone (1) à la troisième zone (3),
sur le bord de la première zone (1) se trouve un support (11) pour placer les portails (9) s'étendant de la deuxième zone (2) au-dessus du un sommet ferroviaire (5) et sur le bord de la troisième zone (3), il y a un support (11) pour placer les portails (9) s'étendant de la deuxième zone (2) au-dessus du châssis du camion (7),
le support (11) sur le bord de la troisième zone (3) est extensible ou repliable, et en position inactive il est inséré ou replié à la base de la troisième zone (3).

2. Le système de transbordement de marchandises depuis ou vers le chemin de fer selon la revendication 1, **caractérisé en ce qu'**il a deux premières zones (1) avec le dessus de rail (5) et entre les deux premières zones (1), il y a une deuxième zone (2) et les portails (9) en position extrême s'étendant aux deux premières zones (1).

3. Le système de transbordement de marchandises depuis ou vers le chemin de fer selon la revendication 1, **caractérisé en ce qu'**il a deux deuxièmes zones (2) des deux parts de la première zone (1) et a deux troisièmes zones (3) placées aux frontières extérieures des deuxièmes zones (2) et les portails (9) en autre position extremes s'étendent à la troisième zone (3).

4. Le système de transbordement de marchandises depuis ou vers le chemin de fer selon quelleconque des revendications 1 à 3 **caractérisé en ce que** les moyens de levage bas (8) sont pat le bas conduits sur les côtés du dessus de rail (5), ont des pieds articulées qui s'étendent jusqu'au niveau de trous de connexion de la cargaison (4) et en position inactive, elles sont repliées sur les côtés vers l'extérieur du profil du dessus de rail (5).

5. Le système de transbordement de marchandises depuis ou vers le chemin de fer selon quelleconque des revendications 1 à 3 **caractérisé en ce que** les moyens de levage bas (8) font partie des portails (9), comprennent avantageusements les vérins de décharge sortant de la partie supérieure des portails (9).

6. Le système de transbordement de marchandises depuis ou vers le chemin de fer selon quelleconque des revendications 1 à 3 et la revendictaion 5 **caractérisé en ce que,** des moyens de levage bas (8) comprennent un mécanisme élevateurs des éléments de connexion (10) faisant partie de portails (9).

7. Le système de transbordement de marchandises depuis ou vers le chemin de fer selon quelleconque des revendications 1 à 6 **caractérisé en ce que** le moyen (6) de mouvement horizontal de la cargaison (4) comprend des roues de guidage et/ou poulies de guidage et/ou courroies.

8. Le système de transbordement de marchandises depuis ou vers le chemin de fer selon quelleconque des revendications 1 à 7 **caractérisé en ce que** le moyen (6) de mouvement horizontal de la cargaison (4) est réglable en hauteur, de préférence le moyen (6) de mouvement horizontal de la cargaison (4) comporte des vérins hydrauliques pour changer la hauteur du mouvement horizontal de la cargaison (4).

9. Un mode de transbordement de marchandises depuis ou vers un chemin de fer, dans lequel une cargaison (4) se déplace horizontalement d'une première zone (1) avec un dessus de rail (5) à travers une deuxième zone (2) avec des moyens (6) pour mouvement horizontal de la cargaison (4) vers une troisième zone (3) avec un camion (7) ou vers la première zone (1) avec un wagon de chemin de fer ou la cargaison (4) se déplace de la troisième zone (3) avec le camion (7) à travers la deuxième zone (2) avec des moyens (6) pour le mouvement horizontal de la cargaison (4) jusqu'à la première zone (1) avec le dessus de rail (5), étant donné qu'avant un déplacement horizontal la cargaison ( 4) est soulevée à une hauteur n'excédant pas 500 mm pour lacher une liaison avec le wagon ou le camion (7), tandis que la cargaison (4) dans la première zone (1) est soulevée par des moyens de levage bas (8), puis il est relié à une paire de portails (9) qui, en position extrême, s'étendent de la deuxième zone (2) à la première zone (1),
**caractérisé en ce que**
à l'aide des portails (9), la cargaison (4) est transportée horizontalement jusqu'à une position dans une zone suivante, où la cargaison (4) est libérée de la liaison aux portails (9),
tandis que la cargaison dans la première zone (1) est soulevée par des moyens élévateurs bas qui sont repliés en position active vers la cargaison (4) depuis les côtés du dessus de rail (5),
tandis que les portails (9) sont télescopiques et à poutre coulissante et que la cargaison est guidée par les portails (9) lors du déplacement de la première zone (1) à la troisième zone (3),
sur le bord de la première zone (1) se trouve un support (11) pour placer les portails (9) s'étendant de la deuxième zone (2) par-dessus du dessus de rail (5) et sur le bord de la troisième zone (3) il y a le support (11) pour placer les portails (9) s'étendant de la deuxième zone (2) par-dessus du châssis du camion (7),
le support (11) sur le bord de la troisième zone (3) est extensible ou repliable, et en position inactive il est inséré ou replié à la base de la troisième zone (3).

10. Le mode de transbordement de marchandises depuis ou vers le chemin de fer selon la revendication 9 **caractérisé en ce que** la cargaison (4) est fixée aux portails (9) par trous de connexion normalisés

11. Le mode de transbordement de marchandises depuis ou vers le chemin de fer selon quelleconque des revendications 9 ou 10 **caractérisé en ce que** la cargaison (4) dans la première zone (1), est soulevée par mécanisme de levage des éléments de connexion (10), qui sont préalablement insérés dans les trous de connexion dans la cargaison (4).

12. Le mode de transbordement de marchandises depuis ou vers le chemin de fer selon quelleconque des revendications 10 ou 11 **caractérisé en ce que** le camion (7) entre dans la troisième zone (3) par support replié ou escamoté (11).
